# EUROPEAN PATENT SPECIFICATION

(11) **EP 4 167 352 B1**
(45) Date of publication and mention of the grant of the patent: **06.05.2026**
(21) Application number: 22197240.9
(22) Date of filing: 22.09.2022
(51) Int. Cl.: H01M 10/658, H01M 50/209, H01M 50/24, H01M 50/249, H01M 50/291, H01M 50/293, H01M 50/30, H01M 50/383

(54) **BATTERY PACK**
BATTERIEPACK
BLOC-BATTERIE

(30) Priority: 30.09.2021 KR 20210130085
(43) Date of publication of application: 19.04.2023
(60) Divisional application: 26167371.9
(73) Proprietor: SK On Co., Ltd., Seoul 03161 (KR)
(72) Inventor: HAN, Jin Su, 34124 Daejeon (KR); KANG, Min Song, 34124 Daejeon (KR); PARK, Ju Yong, 34124 Daejeon (KR); CHO, Sei Hoon, 34124 Daejeon (KR); KIM, Ji Woong, 34124 Daejeon (KR); PAK, Byeong Jun, 34124 Daejeon (KR)
(74) Representative: Prüfer & Partner mbB Patentanwälte · Rechtsanwälte

(56) References cited:
- EP-A1- 3 748 716
- EP-A1- 3 855 525
- KR-A- 20210 070 762
- US-A1- 2020 194 752

## Description

### BACKGROUND

### 1. FIELD

The present disclosure relates to a battery pack having improved safety.

### 2. DESCRIPTION OF RELATED ART

Unlike primary batteries, secondary batteries may be charged and discharged, and thus may be applied to devices within various fields such as digital cameras, mobile phones, notebook computers, hybrid vehicles, and electric vehicles. Among secondary batteries, lithium secondary batteries having high energy density and a high discharge voltage have been actively manufactured. The lithium secondary batteries are manufactured as pouch-type battery cells having flexibility, prismatic battery cells having rigidity, or cylindrical type battery cells.

A plurality of battery cells are stacked on each other and are mounted in a pack case in units of cell stacks that are electrically connected to form a battery pack. Such a battery pack is installed and used in an electric vehicle or the like.
Documents US 2020/194752 A1, EP 3 855 525 A1 and EP 3 748 716 A1 disclose a battery pack comprising a cell stack in which a plurality of battery cells are stacked, a pack case accommodating the cell stack therein, a partition member partitioning an internal space of the pack case into a plurality of spaces, and a blocking member disposed between the partition member and the pack case to block heat propagation between the plurality of spaces. These documents further disclose a sidewall portion forming an internal space, a lower plate covering a lower portion of the internal space, and an upper plate covering an upper portion of the internal space, wherein the blocking member is disposed between the partition member and the upper plate.

Document KR 2021 0070762 A discloses a battery pack including a heat diffusion prevention member, which can effectively block the spread of heat or fire generated in any one of battery modules accommodated in the battery pack and can be variously applied to a vehicle or a power storage device.

However, in such a related art battery pack, if one cell stack ignites, heat or flames may be easily transferred to another cell stack adjacent thereto, and thus secondary ignition or an explosion may occur. Therefore, there is a demand for a battery pack capable of preventing secondary ignition or explosions.

### SUMMARY

Exemplary embodiments provide a battery pack in which an occurrence of secondary ignition or explosion due to a flames or high-temperature gas occurring therein is suppressed.

According to an aspect of the present disclosure, a battery pack includes a cell stack in which a plurality of battery cells are stacked; a pack case accommodating the cell stack therein; a partition member partitioning an internal space of the pack case into a plurality of spaces; and a blocking member disposed between the partition member and the pack case to block heat propagation between the plurality of spaces.

The pack case includes a sidewall portion forming an internal space; a lower plate covering a lower portion of the internal space; and an upper plate covering an upper portion of the internal space, wherein the blocking member may be disposed between the partition member and the upper plate.

The blocking member may include a frame having a polygonal cross-section; and a fire resistant member disposed on a surface of the frame.

The fire resistant member may be disposed on both sides of the frame.

The battery pack further includes: a fastening member fastened to the partition member sequentially through the upper plate and the blocking member.

The partition member may include a first partition member having a lower surface fastened to the lower plate and an upper surface fastened to the upper plate; and a second partition member having a lower surface fastened to the lower plate and an upper surface fastened to the blocking member.

The first partition member and the second partition member may be disposed to be perpendicular to each other and joined to each other by welding.

The first partition member may be disposed to be parallel to a length direction of the cell stack, and the second partition member may be disposed to be parallel to a width direction of the cell stack.

The second partition member may be disposed to face a terminal of the cell stack.

At least a portion of the second partition member may be formed of a material having a melting point higher than that of the lower plate.

The upper plate may be in surface contact with an upper surface of the first partition member and an upper surface of the blocking member.

The second partition member may be formed to have a height smaller than that of the cell stack.

The battery pack may further include a connection member disposed on an upper portion of the partition member and electrically connecting the cell stack, wherein the blocking member may include an insertion recess into which the connection member is inserted.

The insertion recess may be formed on a surface facing the partition member.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view schematically illustrating a battery pack according to an exemplary embodiment in the present disclosure;
FIG. 2 is a partially exploded perspective view of FIG. 1;
FIG. 3 is a partially enlarged perspective view of a partition member of FIG. 1;
FIG. 4 is a partially exploded perspective view of FIG. 3;
FIG. 5 is an exploded perspective view of a blocking member illustrated in FIG. 4;
FIG. 6 is a cross-sectional view taken along line I-I' of FIG. 1;
FIG. 7 is an exploded perspective view illustrating a blocking member and a partition member according to another exemplary embodiment in the present disclosure; and
FIG. 8 is a cross-sectional view of a battery pack corresponding to II-II' of FIG. 7.

### DETAILED DESCRIPTION

Prior to the description of the present invention, terms and words used in the present specification and claims to be described below should not be construed as limited to ordinary or dictionary terms, and should be construed in accordance with the technical idea of the present invention based on the principle that the inventors can properly define their own inventions in terms of terms in order to best explain the invention. Therefore, the embodiments described in the present specification and the configurations illustrated in the drawings are merely the most preferred embodiments of the present invention and are not intended to represent all of the technical ideas of the present invention, and thus should be understood that various equivalents and modifications may be substituted at the time of the present application as long as they fall under the scope of the claims.

Hereinafter, preferred embodiments of the present invention will be described in detail with reference to the accompanying drawings. In this case, in the drawings, the same components are denoted by the same reference symbols as possible. Further, the detailed description of well-known functions and constructions which may obscure the gist of the present invention will be omitted. For the same reason, some of the elements in the accompanying drawings are exaggerated, omitted, or schematically illustrated, and the size of each element does not entirely reflect the actual size.

In addition, in the present specification, the expressions such as an upper side, a lower side, a side face, and the like, are described based on the drawings and may be expressed differently when the direction of the corresponding object is changed.

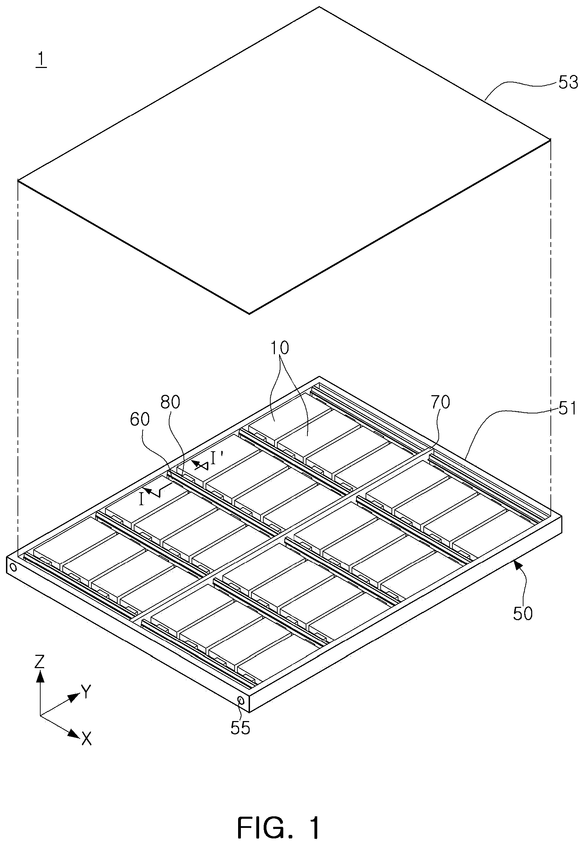

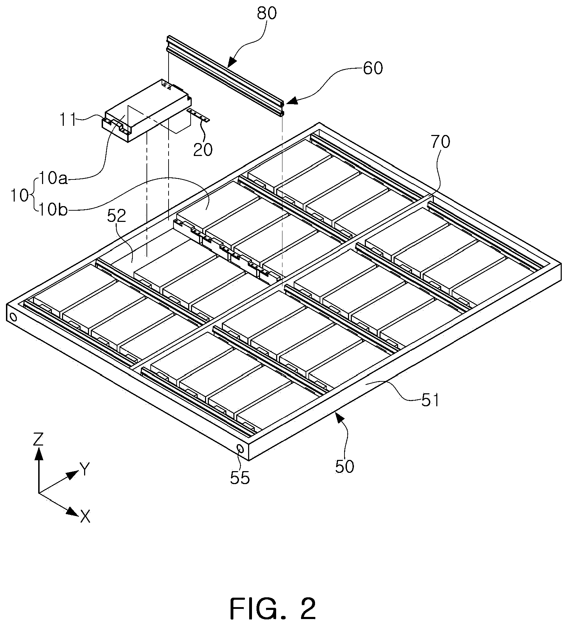

FIG. 1 is a perspective view schematically illustrating a battery pack according to an exemplary embodiment in the present disclosure, and FIG. 2 is a partially exploded perspective view of FIG. 1. For convenience of description, in FIG. 2, an upper plate is omitted.

Referring to FIGS. 1 to 2, the battery pack 1 according to the exemplary embodiment in the present disclosure may include a plurality of cell stacks 10, a pack case 50, a partition member 60, and a blocking member 80.

The cell stack 10 may include a secondary battery such as a lithium battery or a nickel-hydrogen battery capable of charging and discharging. Each cell stack 10 may include a plurality of battery cells stacked therein to have a hexahedral shape and may be accommodated in a case or a stacked state thereof may be fixed by a bracket or the like.

At least one terminal 11 may be provided on one side of the cell stack 10. The terminal 11 may be a conductive member disposed to be exposed to the outside of the cell stack 10 to electrically connect the battery cells to the outside.

In the present exemplary embodiment, the terminal 11 may be disposed on at least one of both ends of the cell stack 10 in a length direction. Also, an upper surface of the terminal 11 may be exposed to the outside of the cell stack 10.

The terminal 11 may include a positive terminal and a negative terminal. Both the positive terminal and the negative terminal may be disposed at one end of the cell stack 10 or may be distributed to be disposed at both ends of the cell stack 10.

A connection member 20 may be fastened to the terminal 11.

The connection member 20 may connect one cell stack 10 and the terminal 11 of another adjacent cell stack 10 to each other.

The connection member 20 may include a bus-bar or a cable. Both ends of the connection member 20 may be respectively fastened to the terminals 11 of different cell stacks 10 through a fastening member such as a bolt.

The cell stacks 10 of the present exemplary embodiment may be connected to each other in series or in parallel through the connection member 20. In addition, if necessary, some of the cell stacks 10 may be connected in series, and some thereof may also be connected in parallel.

The connection member 20 according to the present exemplary embodiment may be formed by machining a flat rod-shaped conductive member. In addition, the connection member 20 may be formed of a material having flexibility. However, a configuration of the present disclosure is not limited thereto.

The pack case 50 may provide an accommodation space for accommodating other components therein. Accordingly, the pack case 50 may be provided in a form surrounding the entire cell stacks 10, and the plurality of cell stacks 10 form a plurality of rows in the accommodation space of the pack case 50 and may be arranged side by side.

The pack case 50 may be formed of a metal material to ensure rigidity, but is not limited thereto. In addition, in order to increase a heat dissipation effect, at least a portion of the pack case 50 may be formed of aluminum.

The pack case 50 may include a sidewall portion 51 forming an internal space, a lower plate 52 covering a lower portion of the internal space, and an upper plate 53 covering an upper portion of the internal space.

The sidewall portion 51 may form an outer surface of the pack case 50 and define an internal space. Accordingly, the cell stacks 10 may be accommodated in an internal space defined by the sidewall portion 51 and seated on the lower plate 52.

The partition members 60 and 70 may be disposed to cross the internal space formed by the sidewall portion 51 to divide the internal space into a plurality of accommodation spaces. Accordingly, at least a portion of the partition members 60 and 70 may be fastened to the sidewall portion 51.

The partition members 60 and 70 may reinforce overall rigidity of the pack case 50. The partition members 60 and 70 may be disposed between the cell stacks 10 to suppress propagation of gas or flames between the cell stacks 10.

Specifically, the partition members 60 and 70 may be disposed to cross between two cell stacks 10 disposed to face each other.

Accordingly, the cell stacks 10 may be distributed to be disposed in a plurality of accommodation spaces partitioned by the sidewall portion 51 and the partition members 60 and 70.

The partition members 60 and 70 of the present exemplary embodiment may include at least one first partition member 70 arranged in parallel with a length direction of the cell stacks 10 and at least one second partition member 60 arranged in parallel with a width direction of the cell stacks 10.

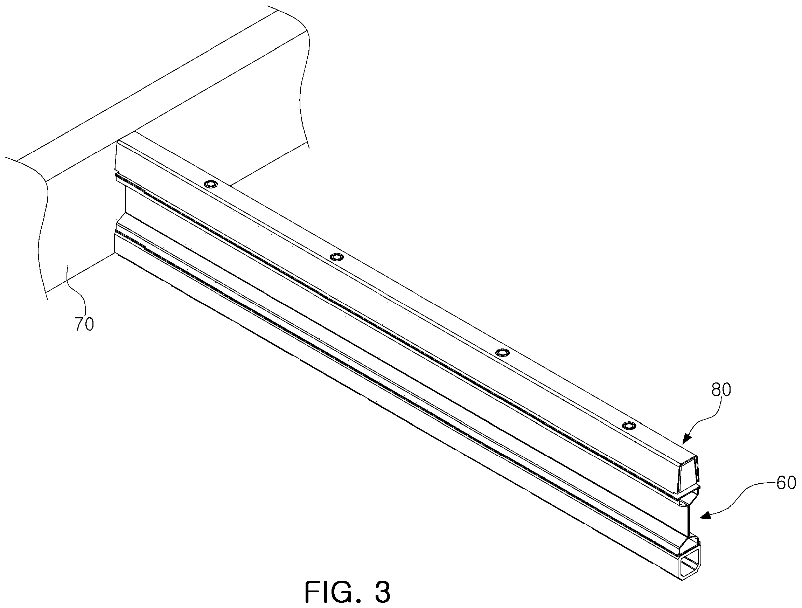

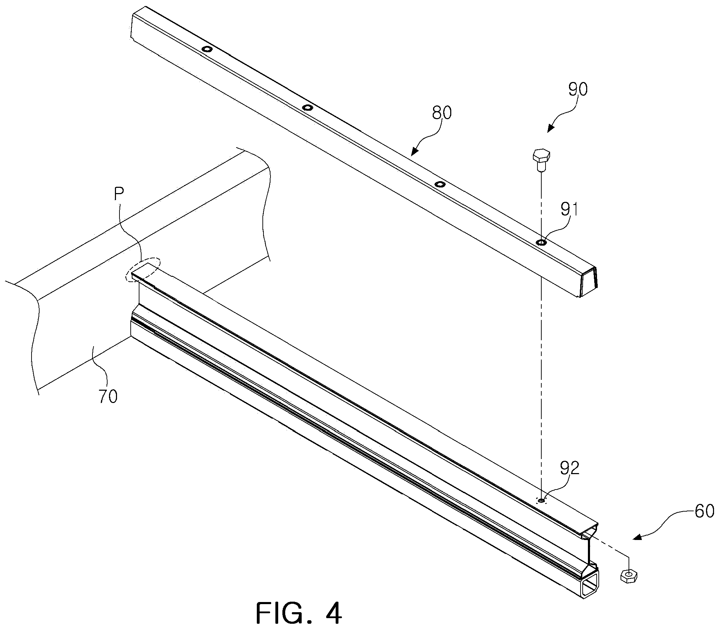

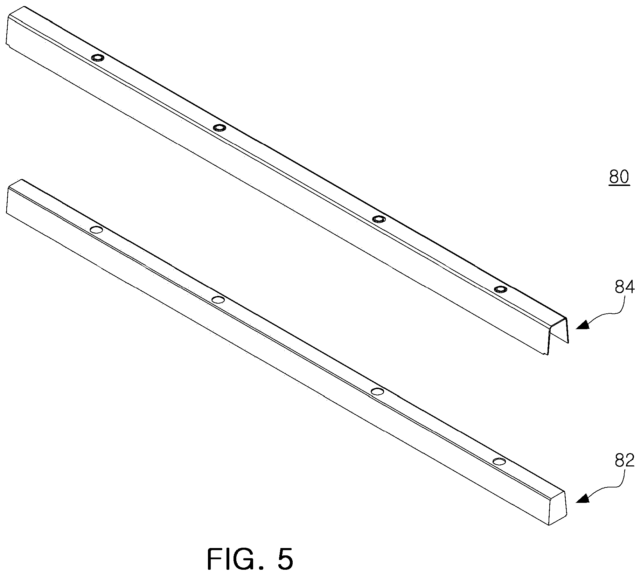

FIG. 3 is a partially enlarged perspective view of the partition member of FIG. 1, FIG. 4 is a partially exploded perspective view of FIG. 3, and FIG. 5 is a cross-sectional view taken along line I-I of FIG. 1. Here, FIGS. 3 and 4 illustrate only the partition members 60 and 70 and the blocking member 80 for convenience of explanation.

Referring to FIGS. 3 to 5 together, both ends of the first partition member 70 may be fastened to the sidewall portion 51 to divide the internal space of the pack case 50 into two parts. However, the present disclosure is not limited thereto, and one or both ends may be configured to be fastened to the second partition member 70 to be described later. Accordingly, a plurality of first partition members 70 may be additionally disposed in various positions.

The first partition member 70 may have an empty space inside or outside. In addition, at least a portion of the empty space may be used as a space in which a connection member for electrically connecting the cell stacks 10 disposed in different accommodation spaces is disposed. Accordingly, when the partition members 60 and 70 are disposed between the two cell stacks 10, the two cell stacks 10 may be electrically connected to each other through the connection member disposed in the space provided in the first partition member 70. Here, the connection member may include a bus bar or a cable.

In addition, at least a portion of the empty space formed by the first partition member 70 may be used as a passage along which a gas emitted from the cell stack 10 moves. Accordingly, in this case, the empty space may function in the same manner as a venting flow path 85 of the second partition member 60 to be described later.

A portion (P of FIG. 4) in which the first partition member 70 and the second partition member 60 are in contact with each other may be welded to fixedly fasten the first partition member 70 and the second partition member 60.

Meanwhile, if a height of the first partition member 70 and a height of the second partition member 60 are the same, burrs may occur in the process of welding an upper surface of the first partition member 70 and an upper surface of the second partition member 60, and such burrs may act as an element hindering coupling with the upper plate 53.

To prevent this, in the battery pack 1 of the present exemplary embodiment, the first partition member 70 and the second partition member 60 have different heights. Specifically, in the battery pack 1 of the present exemplary embodiment, the height of the first partition member 70 may be greater than the height of the second partition member 60. In this case, as illustrated in FIG. 4, since the upper surface of the second partition member 60 is welded to a side surface of the first partition member 70, coupling of the upper plate 53 and the first partition member 70 may not be interfered with, even if burrs occur. Therefore, an additional process of removing burrs may be omitted, thereby facilitating manufacturing.

Due to the configuration described above, the upper surface of the first partition member 70 of the present exemplary embodiment may be in direct surface contact with the upper plate 53 and be fastened to the upper plate 53. In addition, the upper surface of the second partition member 60 may be spaced apart from the upper plate 53 by a predetermined distance.

The second partition member 60 may be disposed to face one of side surfaces of the cell stacks 10, on which the terminal 11 is disposed.

When a battery cell ignites or explodes inside the cell stack 10, explosion byproducts such as high-temperature gas, flames, and metal particles occurring in the cell stack 10 may be mainly ejected to the outside of the cell stack 10 from the periphery of the terminal 11 of the cell stack 10.

For this reason, most of the explosion byproducts ejected from the cell stack 10 may be ejected toward the second partition member 60 to first contact the second partition member 60. Therefore, when the second partition member 60 is formed of a material having a low melting point, the second partition member 60 may be easily melted by contact with the explosion byproducts.

In order to prevent this, at least a portion of the second partition member 60 of the present exemplary embodiment may be formed of a high fire resistance material that is melted at a temperature of 700°C or higher. For example, a portion of the second partition member 60 facing the terminal 11 may be formed of a material including a metal such as steel or an inorganic binder such as aerogel or synthetic mica. In addition, the second partition member 60 may be manufactured through post-processing such as coating for reinforcing heat resistance, fire resistance, strength and rigidity, a heat treatment, and the like.

In addition, when the lower plate 52 of the battery pack 1 is formed of an aluminum material in order to increase a heat dissipation effect of the battery pack 1, at least a portion of the second partition member 60 may be formed of a material different from that of the lower plate 52. For example, a portion of the second partition member 60 facing the terminal 11 may be formed of a material having a melting point higher than the lower plate 52.

Meanwhile, the first partition member 70 and the pack case 50 may also be configured to contain a high fire-resistance material that is melted at a temperature of 700°C or higher, similarly to the second partition member 60.

Referring to FIG. 5, an empty space having a certain size may be formed between the cell stack 10 and the second partition member 60, and in the present exemplary embodiment, the empty space may be used as the venting flow path 85.

When explosion byproducts such as gas are discharged from the cell stack 10 due to ignition of the battery cells, etc., the venting flow path 85 may be used as a passage through which the explosion byproducts move to the outside from the battery pack 1. Therefore, the explosion byproducts may move to the sidewall portion 51 of the pack case 50 through the venting flow path 85 and then discharged to the outside of the pack case 50 through a venting hole 55 provided in the sidewall portion 51.

In the present exemplary embodiment, the venting flow path 85 may include a first venting flow path 85a disposed to face the first cell stack 10a and a second venting flow path 85b disposed to face the second cell stack 10b.

In the present exemplary embodiment, the first venting flow path 85a and the second venting flow path 85b may be divided by the second partition member 60, and may be provided to be horizontally symmetrical with respect to the second partition member 60. However, the configuration of the present disclosure is not limited thereto and may be variously modified.

Meanwhile, the pack case 50 may be provided with a passage through which the explosion byproducts may move to the venting hole 55. The passage may be formed in the inside of the sidewall portion 51 or as a space between the sidewall portion 51 and the cell stack 10. Therefore, the explosion byproducts introduced into the venting flow path 85 may be discharged to the outside through the venting hole 55 after being introduced into the passage described above. Accordingly, rapid propagation of flames/heat and secondary damage may be minimized.

In order to easily fasten the connection member 20 to the cell stack 10, the second partition member 60 of the present exemplary embodiment may be formed to have a height smaller than that of the cell stack 10. Therefore, if any one of the cell stacks 10 is ignited, a high-temperature gas or combustion material, flames, and the like may propagate toward another cell stack 10 through a gap between the second partition member 60 and the upper plate 53.

Therefore, the battery pack 1 of the present exemplary embodiment may include the blocking member 80.

The blocking member 80 may block propagation of heat or explosion byproducts to another accommodation space through a gap between the second partition member 60 and the upper plate 53. That is, the blocking member 80 may be provided to maximally seal the accommodation spaces in which the cell stacks 10 are distributed to be disposed.

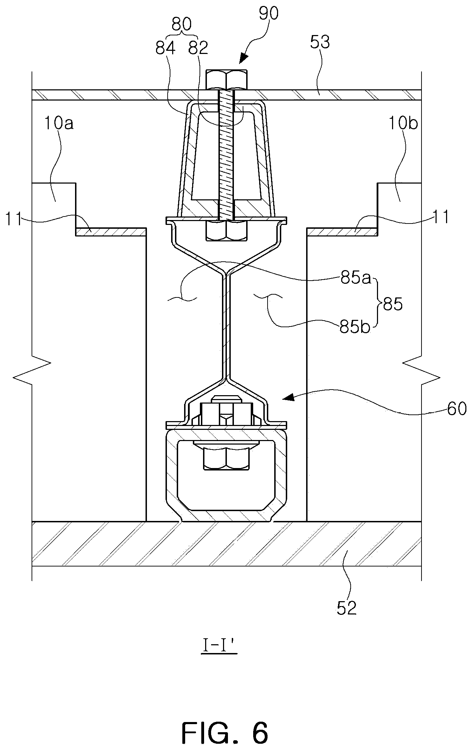

FIG. 6 is an exploded perspective view of the blocking member illustrated in FIG. 4. Referring to FIGS. 4 and 6, the blocking member 80 may be disposed between the second partition member 60 and the upper plate 53 and coupled to the second partition member 60 and the upper plate 53. Accordingly, the upper plate 53 may be in surface contact with the upper surface of the first partition member 70 and the upper surface of the blocking member 80 to be coupled to the partition members 60 and 70.

The blocking member 80 may include a frame 82 constituting an overall shape and a fire resistant member 84 coupled to the frame 82.

The frame 82 is coupled to an upper surface of the second partition member 60 along the second partition member 60. Accordingly, the frame 82 may be formed in a shape corresponding to the upper surface of the second partition member 60.

For example, the frame 82 may have a polygonal cross-section, may be formed to have a long rod shape and may be coupled to the second partition member 60. Accordingly, the frame 82 may be formed to have a width similar to a width of the upper surface of the second partition member 60. However, the present disclosure is not limited thereto and may be variously modified as long as the frame may be disposed on the second partition member 60 along the second partition member 60.

The frame 82 may be formed of a material such as resin or metal, but is not limited thereto, and any material having rigidity similar to that of the above material may be used as a material of the frame 82.

As illustrated in FIGS. 4 and 5, the frame 82 may be fastened to the second partition member 60 through a fastening member 90 such as a bolt. For convenience of description, in FIG. 4, the upper plate 53 is omitted.

After the fastening member 90 is inserted sequentially passing through the upper plate 53 and the blocking member 80, an end thereof is fastened to the second partition member 60. After a bolt is sequentially inserted into a through-hole 91 of a blocking member 90 and a through-hole 92 of the second bulkhead member 60, the fastening member 90 of the present exemplary embodiment may be coupled to a nut to couple the blocking member 80 and the second partition member 60 each other. However, the present disclosure is not limited thereto, and a screw thread may be formed on an inner circumferential surface of the through-hole 92 of the second partition member 60 and the bolt may be screwed to the screw thread.

Meanwhile, the present disclosure is not limited to the above configuration. For example, the second partition member 60 and the blocking member 80 may be primarily coupled and the blocking member 80 and the upper cover may be secondarily coupled. That is, various modification may be made as long as the blocking member 80 is firmly fixed between the upper plate 53 and the second partition member 60.

The fire resistant member 84 may be coupled to a surface of the frame 82 in a form surrounding at least a portion of the frame 82.

Specifically, the fire resistant member 84 may be disposed to surround both side surfaces and an upper surface of the frame 82. Here, both side surfaces of the frame 82 refer to a side facing the cell stack 10, and the upper surface refers to a side facing the upper plate 53.

In the present exemplary embodiment, the cell stacks 10 may be disposed on both sides of the second partition member 60, respectively. Accordingly, the fire resistant member 84 may also be disposed on both sides of the frame 82.

In the present exemplary embodiment, the fire resistant member 84 is not disposed on a lower surface of the frame 82 facing the second partition member 60. However, the configuration of the present disclosure is not limited thereto, and it is also possible to arrange the fire resistant member 84 on the lower surface of the frame 82 if necessary.

Since the fire resistant member 84 should block propagation of a high-temperature gas or flames, the fire resistant member 84 may be formed of a flames-retardant material, a non-flammable material, or a fire-insulating material. For example, the fire resistant member 84 may be formed of a material including ceramic to perform fire resistance/insulation, an inorganic binder such as aerogel or mica, a material in the form of a sheet formed by applying a gel-type insulating material including sodium silicate on a thin film or using the same, or a fibrous fire-resistance insulating material such as ceramic wool or glass fiber having flame-retardant performance.

In addition, the fire resistant member 84 may be formed of a rubber material including ceramic having thermal barrier properties or may be formed of a rubber material containing expandable graphite, so that graphite may rapidly expands to form an insulating layer, when exposed to heat.

The fire resistant member 84 may be formed in the form of a sheet or a film and attached to the surface of the frame 82. However, the present disclosure is not limited thereto.

In the battery pack 1 of the present exemplary embodiment configured as described above, since the blocking member 80 is disposed in the gap between the second partition member 60 and the upper plate 53, the accommodation space of the battery pack 1 may be formed as a plurality of compartments.

Therefore, it is possible to suppress spread of explosion byproducts to other adjacent compartments when the battery cell is ignited, thereby suppressing an occurrence of secondary ignition or explosion in the other compartment.

Meanwhile, the present disclosure is not limited to the exemplary embodiment described above and various modifications may be made as far as they fall under the scope of the claims.

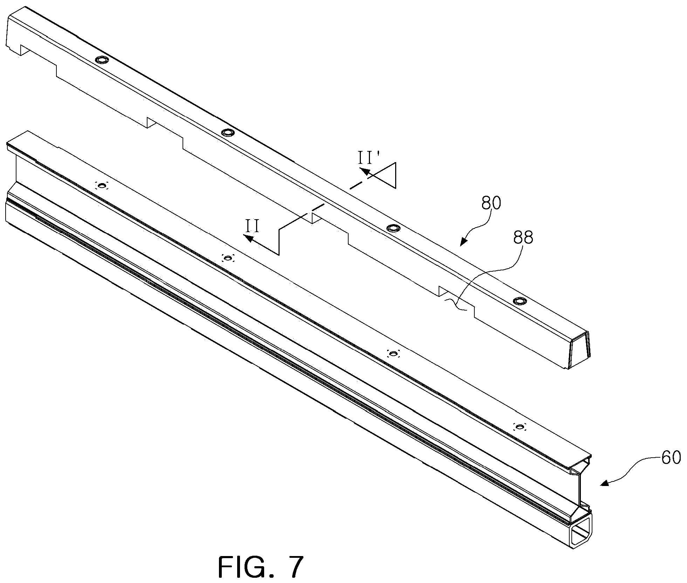

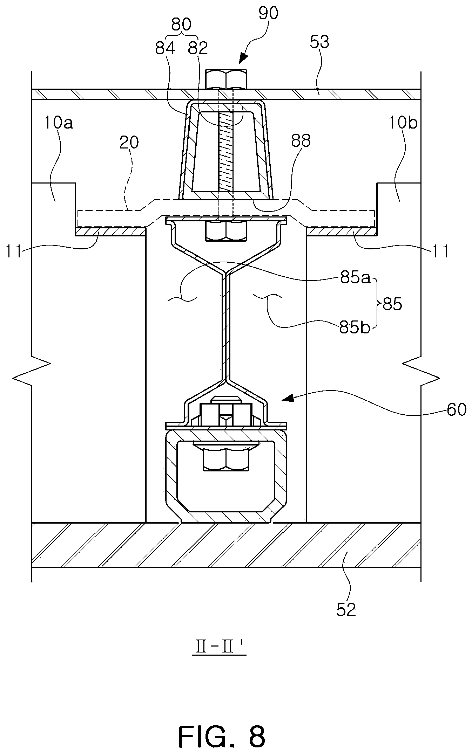

FIG. 7 is an exploded perspective view illustrating a blocking member and a partition member according to another exemplary embodiment in the present disclosure, and FIG. 8 is a cross-sectional view of a battery pack corresponding to II-II' of FIG. 7, illustrating a cross-section corresponding to FIG. 5.

Referring to FIGS. 7 to 8, in the battery pack 1 of the present exemplary embodiment, the connection member 20 may be disposed on the second partition member 60 to connect the cell stacks 10 to each other, and thus at least a portion thereof may be disposed in a gap between the second partition member 60 and the upper plate 53.

Correspondingly, the blocking member 80 of the present exemplary embodiment may have an insertion recess 88 into which the connection member 20 is inserted.

The insertion recess 88 may be formed on a surface on which the blocking member 80 faces the second partition member 60, and a plurality of insertion recesses 88 may be spaced apart from each other by a predetermined distance.

The insertion recess 88 may be formed as a recess having a size corresponding to a size (e.g., a cross-sectional area) of the connection member 20, and a shape thereof is not particularly limited. However, if the insertion recess 88 is formed excessively large compared to the connection member 20, there is a possibility that explosion byproducts are spread to other compartments through the insertion recess 88, so the insertion recess 88 may have a size and shape in which the connection member 20 may be firmly inserted.

When the blocking member 80 is fastened to the second partition member 60, the insertion recess 88 forms a through-hole shape, and the connection member 20 may be disposed to penetrate through the blocking member 80 through the insertion hole 88.

According to the exemplary embodiment in the present disclosure, since the blocking member is disposed in the gap between the partition member and the pack case, the accommodation space in the battery pack may be formed as a plurality of compartments.

Therefore, in the event of ignition of the battery cell, spread of explosion byproducts to other adjacent compartments may be suppressed, thereby suppressing the occurrence of secondary ignition or explosion in other compartments.

## Claims

1. A battery pack (1) comprising:
a cell stack (10) in which a plurality of battery cells are stacked;
a pack case (50) accommodating the cell stack (10) therein;
a partition member (60, 70) partitioning an internal space of the pack case (50) into a plurality of spaces; and
a blocking member (80) disposed between the partition member (60) and the pack case (50) to block heat propagation between the plurality of spaces,
wherein the pack case includes:
a sidewall portion (51) forming the internal space;
a lower plate (52) covering a lower portion of the internal space; and
an upper plate (53) covering an upper portion of the internal space,
wherein the blocking member (80) is disposed between the partition member (60) and the upper plate (53), and
wherein the battery pack (1) further comprises:
a fastening member (90) fastened to the partition member (60) sequentially through the upper plate (53) and the blocking member (80).

2. The battery pack (1) of claim 1, wherein
the blocking member (80) includes:
a frame (82) having a polygonal cross-section; and
a fire resistant member (84) disposed on a surface of the frame (82).

3. The battery pack (1) of claim 2, wherein the fire resistant member (84) is disposed on both sides of the frame (82).

4. The battery pack (1) of anyone of claims 1 to 3, wherein
the partition member (60, 70) includes:
a first partition member (70) having a lower surface fastened to the lower plate (52) and an upper surface fastened to the upper plate (53); and
a second partition member (60) having a lower surface fastened to the lower plate (52) and an upper surface fastened to the blocking member (80).

5. The battery pack (1) of claim 4, wherein the first partition member (70) and the second partition member (60) are disposed to be perpendicular to each other and joined to each other by welding.

6. The battery pack (1) of claim 4, wherein the first partition member (70) is disposed to be parallel to a length direction of the cell stack (10), and the second partition member (60) is disposed to be parallel to a width direction of the cell stack (10).

7. The battery pack (1) of anyone of claims 4 to 6,
wherein the second partition member (60) is disposed to face a terminal (11) of the cell stack (10).

8. The battery pack (1) of anyone of claims 4 to 7,
wherein at least a portion of the second partition member (60) is formed of a material having a melting point higher than that of the lower plate (52).

9. The battery pack (1) of anyone of claims 4 to 8,
wherein the upper plate (53) is in surface contact with an upper surface of the first partition member (70) and an upper surface of the blocking member (80).

10. The battery pack (1) of anyone of claims 4 to 9,
wherein the second partition member (60) is formed to have a height smaller than that of the cell stack (10).

11. The battery pack (1) of anyone of the preceding claims, further comprising:
a connection member (20) disposed on an upper portion of the partition member (60) and electrically connecting the cell stack (10),
wherein the blocking member (80) includes an insertion recess (88) into which the connection member (20) is inserted.

12. The battery pack (1) of claim 11, wherein the insertion recess (88) is formed on a surface facing the partition member (60).

## Patentansprüche

1. Batteriepack (1), aufweisend:
einen Zellenstapel (10), in dem eine Vielzahl von Batteriezellen gestapelt ist;
ein Packgehäuse (50), das den Zellenstapel (10) darin aufnimmt;
ein Trennelement (60, 70), das einen Innenraum des Packgehäuses (50) in eine Vielzahl von Räumen unterteilt; und
ein Blockierelement (80), das zwischen dem Trennelement (60) und dem Packgehäuse (50) angeordnet ist, um eine Wärmeausbreitung zwischen der Vielzahl von Räumen zu blockieren,
wobei das Packgehäuse enthält:
einen Seitenwandabschnitt (51), der den Innenraum bildet;
eine untere Platte (52), die einen unteren Abschnitt des Innenraums abdeckt; und
eine obere Platte (53), die einen oberen Abschnitt des Innenraums abdeckt,
wobei das Blockierelement (80) zwischen dem Trennelement (60) und der oberen Platte (53) angeordnet ist, und
wobei der Batteriepack (1) ferner aufweist:
ein Befestigungselement (90), das nacheinander durch die obere Platte (53) und das Blockierelement (80) an dem Trennelement (60) befestigt ist.

2. Batteriepack (1) nach Anspruch 1, wobei
das Blockierelement (80) enthält:
einen Rahmen (82) mit einem polygonalen Querschnitt; und
ein feuerbeständiges Element (84), das auf einer Oberfläche des Rahmens (82) angeordnet ist.

3. Batteriepack (1) nach Anspruch 2, wobei das feuerbeständige Element (84) auf beiden Seiten des Rahmens (82) angeordnet ist.

4. Batteriepack (1) nach einem der Ansprüche 1 bis 3, wobei
das Trennelement (60, 70) enthält:
ein erstes Trennelement (70) mit einer an der unteren Platte (52) befestigten unteren Fläche und einer an der oberen Platte (53) befestigten oberen Fläche; und
ein zweites Trennelement (60) mit einer an der unteren Platte (52) befestigten unteren Fläche und einer an dem Blockierelement (80) befestigten oberen Fläche.

5. Batteriepack (1) nach Anspruch 4, wobei das erste Trennelement (70) und das zweite Trennelement (60) angeordnet sind, senkrecht zueinander zu sein und durch Schweißen miteinander verbunden zu sein.

6. Batteriepack (1) nach Anspruch 4, wobei das erste Trennelement (70) angeordnet ist, parallel zu einer Längsrichtung des Zellenstapels (10) zu sein, und das zweite Trennelement (60) angeordnet ist, parallel zu einer Breitenrichtung des Zellenstapels (10) zu sein.

7. Batteriepack (1) nach einem der Ansprüche 4 bis 6, wobei das zweite Trennelement (60) angeordnet ist, einem Anschluss (11) des Zellenstapels (10) zugewandt zu sein.

8. Batteriepack (1) nach einem der Ansprüche 4 bis 7, wobei mindestens ein Abschnitt des zweiten Trennelements (60) aus einem Material gebildet ist, das einen Schmelzpunkt aufweist, der höher als der der unteren Platte (52) ist.

9. Batteriepack (1) nach einem der Ansprüche 4 bis 8, wobei die obere Platte (53) mit einer oberen Fläche des ersten Trennelements (70) und einer oberen Fläche des Blockierelements (80) in Flächenkontakt ist.

10. Batteriepack (1) nach einem der Ansprüche 4 bis 9, wobei das zweite Trennelement (60) gebildet ist, eine Höhe zu haben, die kleiner als die des Zellenstapels (10) ist.

11. Batteriepack (1) nach einem der vorhergehenden Ansprüche, ferner aufweisend:
ein Verbindungselement (20), das an einem oberen Abschnitt des Trennelements (60) angeordnet ist und den Zellenstapel (10) elektrisch verbindet,
wobei das Blockierelement (80) eine Einführaussparung (88) enthält, in die das Verbindungselement (20) eingeführt ist.

12. Batteriepack (1) nach Anspruch 11, wobei die Einführaussparung (88) auf einer dem Trennelement (60) zugewandten Fläche gebildet ist.

## Revendications

1. Bloc-batterie (1) comprenant :
un empilement de cellules (10) dans lequel une pluralité de cellules de batterie sont empilées ;
un boîtier de bloc (50) recevant l'empilement de cellules (10) dans celui-ci ;
un élément de séparation (60, 70) séparant un espace interne du boîtier de bloc (50) en une pluralité d'espaces ; et
un élément de blocage (80) disposé entre l'élément de séparation (60) et le boîtier de bloc (50) pour bloquer la propagation de chaleur entre la pluralité d'espaces,
où le boîtier de bloc comprend :
une partie de paroi latérale (51) formant l'espace interne;
une plaque inférieure (52) recouvrant une partie inférieure de l'espace interne; et
une plaque supérieure (53) recouvrant une partie supérieure de l'espace interne,
où l'élément de blocage (80) est disposé entre l'élément de séparation (60) et la plaque supérieure (53), et
où le bloc-batterie (1) comprend en outre:
un élément de fixation (90) fixé à l'élément de séparation (60) séquentiellement à travers la plaque supérieure (53) et l'élément de blocage (80).

2. Bloc-batterie (1) selon la revendication 1, où
l'élément de blocage (80) comprend :
un cadre (82) ayant une section transversale polygonale ; et
un élément résistant au feu (84) disposé sur une surface du cadre (82).

3. Bloc-batterie (1) selon la revendication 2, où l'élément résistant au feu (84) est disposé sur les deux côtés du cadre (82).

4. Bloc-batterie (1) selon l'une quelconque des revendications 1 à 3, où
l'élément de séparation (60, 70) comprend:
un premier élément de séparation (70) ayant une surface inférieure fixée à la plaque inférieure (52) et une surface supérieure fixée à la plaque supérieure (53); et
un deuxième élément de séparation (60) ayant une surface inférieure fixée à la plaque inférieure (52) et une surface supérieure fixée à l'élément de blocage (80).

5. Bloc-batterie (1) selon la revendication 4, où le premier élément de séparation (70) et le deuxième élément de séparation (60) sont disposés pour être perpendiculaires l'un à l'autre et joints l'un à l'autre par soudage.

6. Bloc-batterie (1) selon la revendication 4, où le premier élément de séparation (70) est disposé pour être parallèle à une direction de longueur de l'empilement de cellules (10), et le deuxième élément de séparation (60) est disposé pour être parallèle à une direction de largeur de l'empilement de cellules (10).

7. Bloc-batterie (1) selon l'une quelconque des revendications 4 à 6, où le deuxième élément de séparation (60) est disposé pour faire face à une borne (11) de l'empilement de cellules (10).

8. Bloc-batterie (1) selon l'une quelconque des revendications 4 à 7, où au moins une partie du deuxième élément de séparation (60) est formée d'un matériau ayant un point de fusion supérieur à celui de la plaque inférieure (52).

9. Bloc-batterie (1) selon l'une quelconque des revendications 4 à 8, où la plaque supérieure (53) est en contact de surface avec une surface supérieure du premier élément de séparation (70) et une surface supérieure de l'élément de blocage (80).

10. Bloc-batterie (1) selon l'une quelconque des revendications 4 à 9, où le deuxième élément de séparation (60) est formé pour avoir une hauteur inférieure à celle de l'empilement de cellules (10).

11. Bloc-batterie (1) selon l'une quelconque des revendications précédentes, comprenant en outre:
un élément de connexion (20) disposé sur une partie supérieure de l'élément de séparation (60) et connectant électriquement l'empilement de cellules (10),
où l'élément de blocage (80) comprend un évidement d'insertion (88) dans lequel l'élément de connexion (20) est inséré.

12. Bloc-batterie (1) selon la revendication 11, où l'évidement d'insertion (88) est formé sur une surface faisant face à l'élément de séparation (60).
